# EUROPEAN PATENT APPLICATION

(11) **EP 2 312 463 A1**
(43) Date of publication of application: **20.04.2011**
(21) Application number: 09290795.5
(22) Date of filing: 16.10.2009
(51) Int. Cl.: G06F 17/30

(54) **Data provider with transcient universe**

(71) Applicant: Business Objects Software Ltd., Dublin 1 (IE)
(72) Inventor: Le Biannic, Yann, 69190 Walldorf (DE); O'Byrne, John, 69190 Walldorf (DE); Calvente, Juan Francisco, 69190 Walldorf (DE)
(74) Representative: Müller-Boré & Partner Patentanwälte

(57) **Abstract**

A computer-implemented system to receive an instruction to initialize a data provider associated with an analysis cube and a dataset, and, in response to the instruction, acquire first metadata associated with the analysis cube and generate, based on the first metadata, second metadata of an abstraction layer comprising a plurality of objects. A query comprising a first plurality of objects of the abstraction layer is received, the query is transformed to a query state based on the second metadata of the abstraction layer, and a result set is acquired from the dataset using the query state and the analysis cube.

## Description

### BACKGROUND

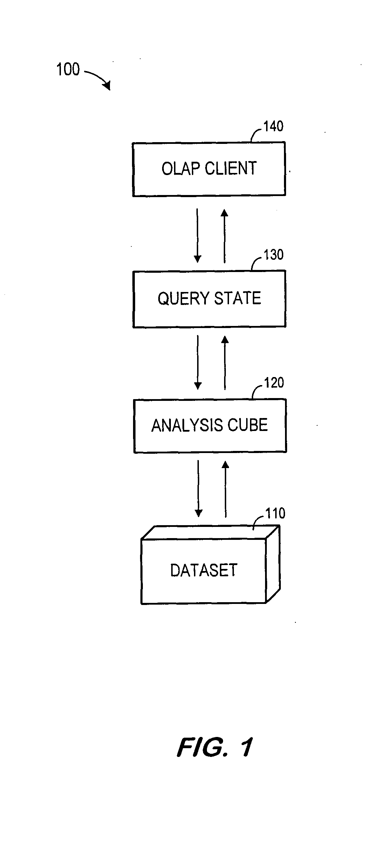

FIG. 1 illustrates conventional business warehouse analysis system 100. System 100 includes dataset 110, analysis cube 120, query state 130 and Online Analytical Processing (OLAP) client 140. The elements of system 100 may generally operate to provide data from dataset 110 to OLAP client 140.

Dataset 110 may comprise one or more cubes, InfoCubes, DataStore Objects, InfoSets, MultiProviders, InfoObjects and/or any other suitable of forms of OLAP data. Analysis cube 120 may comprise metadata for defining a particular navigation of dataset 110 and for facilitating evaluation of the corresponding data. For example, analysis cube 120 may comprise an SAP Business Explorer (BEx) query which restricts characteristics and key figures of dataset 110 according to characteristic values, characteristic value intervals, and hierarchy nodes. Analysis cube 120 may also define calculated and restricted key figures for reuse, structures for reuse, exceptions and conditions. Moreover, analysis cube 120 may defme variables for such characteristic values, hierarchies, hierarchy nodes, as well as for texts or formulas.

Query state 130 specifies a navigation status which may be used in conjunction with analysis cube 120 to acquire a result set of data from dataset 110. According to some systems, the navigation status is instantiated in an SAP Netweaver Business Intelligence Consumer Services (BICS) query view, which is used by a corresponding BEx query to acquire a desired result set from dataset 110. OLAP client 140 may provide information used to generate query state 130. For example, OLAP client 140 may comprise SAP BEx Analyzer and may be operated by a user to specify particular data based on a BEx query (i.e., analysis cube 120). A corresponding BICS query state is then generated to retrieve the particular data through the BEx query.

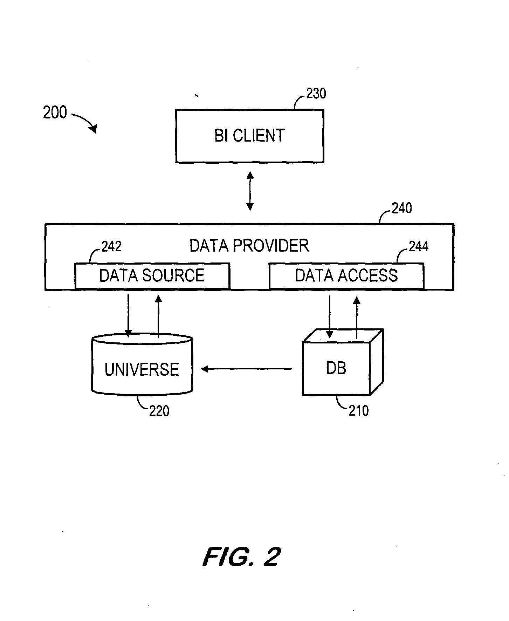

FIG. 2 is a block diagram of another conventional system to access stored business data. Database 210 includes physical tables storing business data. Database 210 may comprise a relational database, such as Oracle, Microsoft SQL Server, IBM DB2, Teradata and the like. Alternatively, database 210 could be a multi-dimensional database, an eXtendable Markup Language document, or any other structured data storage system.

Due to the complexity of the physical tables, a typical end user is unable to extract desired information therefrom. Business Intelligence (BI) tools (e.g., SAP BusinessObjects Universe Designer) may be used to build an abstraction layer such as universe 220 that shields end users from the complexity of the physical tables. More specifically, universe 220 allows a user of BI client 230 (e.g., SAP BusinessObjects Web Intelligence, Crystal Reports) to query database 210 using intuitive terms rather than references to specific physical entities of database 210.

Universe 220 includes metadata defining a set of "business objects" that represent business entities, such as customers, time, financial figures, etc. Business objects may be classified as dimensions (along which one may want to perform an analysis or report), details (e.g., additional information on dimensions), and measures (e.g., indicators, most often numeric, whose value can be determined for a given combination of dimension values). The metadata of universe 220 maps the business objects to specific physical entities of database 210.

BI client 230 may transmit a symbolic query including one or more of the business objects to data provider 240. Data source module 242 then generates a database query (e.g., SQL, MDX) based on the symbolic query and the metadata of universe 220. Data access module 244 queries database 210 using the database query and retrieves desired data therefrom. Data provider 240 may then provide the desired data to BI client 230.

Current systems have attempted to integrate business warehouse datasets into the universe-based architecture of system 200. In particular, such systems require a customer to design business warehouse metadata based on a business warehouse dataset, to create a universe based on the business warehouse metadata, and to save the universe. The universe must be re-created and re-saved in response to any changes to the business warehouse metadata.

More-efficient integration of the above-described systems is desired. Such integration may provide interoperability between OLAP and BI clients. For example, desired systems may allow a user to create a query state within an OLAP client and to use the query state within a BI document. The user may move directly from the OLAP client to the BI client within an uninterrupted analysis session.. In another scenario, the user saves the query state from the OLAP client and the same or another user later opens the saved query state from a BI client.

### BRIEF DESCRIPTION OF THE DRAWINGS

FIG. 1 is a block diagram of a business warehouse analysis system.
FIG. 2 is a block diagram of a business intelligence system.
FIG. 3 is a block diagram of a system according to some embodiments.
FIG. 4 is a flow diagram of a process according to some embodiments.
FIG. 5 illustrates data selection and aggregation according to BI Consumer Services.
FIG. 6 illustrates data selection and aggregation according to a dimensional semantic layer query specification.
FIG. 7 is a class diagram of a system according to some embodiments.
FIG. 8 is a flow diagram of a process according to some embodiments.
FIG. 9 is a flow diagram of a process according to some embodiments.
FIG. 10 is a class diagram of a query specification according to some embodiments.

### DETAILED DESCRIPTION

The following description is provided to enable any person in the art to make and use the described embodiments and sets forth the best mode contemplated for carrying out some embodiments. Various modifications, however, will remain readily apparent to those in the art.

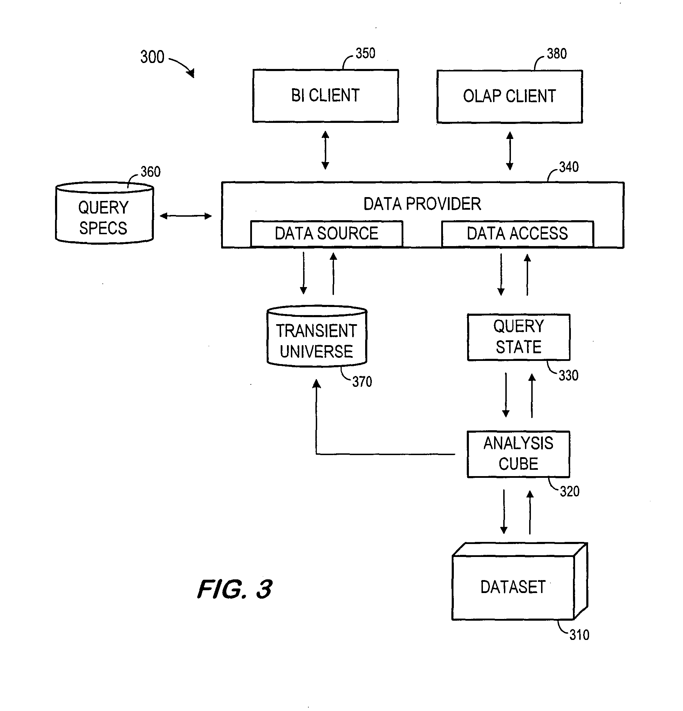

FIG. 3 is a block diagram of system 300 according to some embodiments. The elements of system 300 may operate to provide direct data access to an analysis cube (e.g., a BEx query) through a universe-based data provider. The access may leverage existing services of the business warehouse platform (e.g., BI Consumer Services) and may eliminate the need to maintain a separate dedicated universe. System 300 may include elements in addition to those illustrated, and some embodiments may omit one or more elements of system 300.

Dataset 310, analysis cube 320 and query state 330 may comprise any of the examples described above with respect to corresponding ones of dataset 110, analysis cube 120 and query state 130 of system 100. Dataset 310, analysis cube 320 and query state 330 may therefore comprise elements conventionally employed in any OLAP analysis platform.

Data provider 340 (e.g., SAP BusinessObjects Information Engine) may perform the functions attributed above to data provider 240 of system 200. System 300 may therefore include one or more instantiations of database 210 and corresponding universe 220; these instantiations are omitted from FIG. 3 for clarity. Data provider 340 may also interact with elements (e.g., BICS SDK) of the business warehouse platform to provide BI client 350 with access to analysis cube 320 using the same metadata metaphor as provided by data provider 240. Data provider 340 may thereby provide BI client 350 with a consistent consumption experience through disparate OLAP sources. Data provider 340 may support a dimensional semantic layer such as those described in commonly-assigned U.S. Patent No. 7,181,440 and commonly-assigned U.S. Patent Application Serial No. 12/463,702, but embodiments are not limited thereto.

Storage 360 may comprise a Central Management Server (CMS) including query specifications and business documents based on the query specifications. The query specifications may comprise queries such as those used in system 200 to query a BI data source.

According to some embodiments, a query specification may include a query state which may be used to extract a result set from dataset 310. In some of these embodiments, the query state is extracted from a pQuery (i.e., "persistent Query") which is realized as a shared InfoObject in storage 360. The pQuery may be created by OLAP Client 380 and associated with a transient connection (e.g., to analysis cube 320) and with transient universe 370.

Similar to universe 220 of system 200, transient universe 370 includes metadata of an abstraction layer comprising a plurality of objects. However, the metadata of transient universe 370 is generated based on metadata of analysis cube 320. Details of this generation according to some embodiments are provided below. Additionally, in some embodiments, the metadata of transient universe 370 is generated to determine a query state based on a query received from BI client 350. According to these embodiments, neither the transient connection nor transient universe 370 is persisted separately in storage 360.

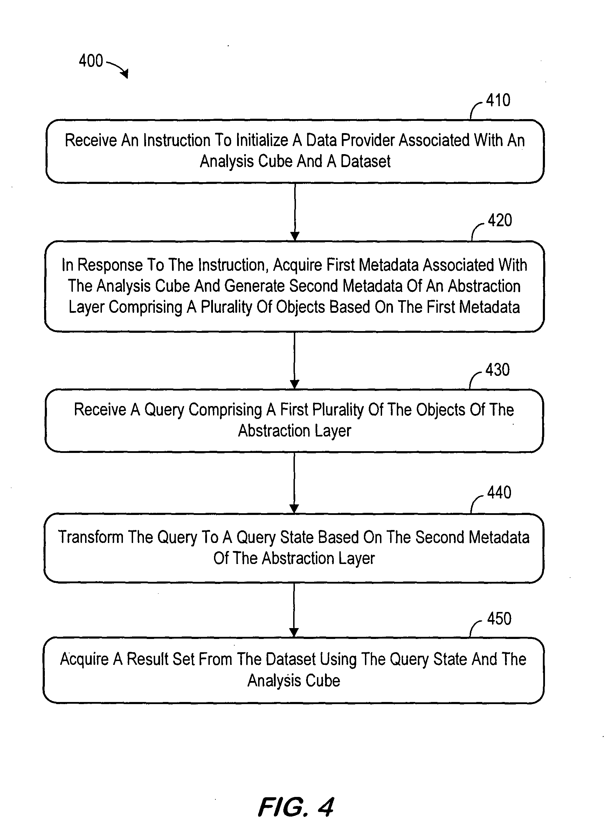

FIG. 4 is a flow diagram of process 400 according to some embodiments. Process 400, and all other processes described herein, may be executed by hardware and/or embodied in program code stored on a tangible computer-readable medium. Process 400 may be performed by data provider 340 of system 300, but examples are not limited thereto.

Initially, at 410, an instruction to initialize a data provider is received. The instruction specifies an analysis cube and a dataset with which the data provider will be associated. According to some embodiments, a user operates BI client 350 at 410 to select and connect to a business warehouse system (e.g., SAP Netweaver BI) including the analysis cube of interest.

A connection object is defined on storage 360 for each available OLAP-based business warehouse system. A connection object includes information to connect to a business warehouse system and may also point to a dataset (e.g., cube) and an analysis cube (e.g., BEx query). Based on the one or more connection objects defined on storage 360 and on the user's security rights, data provider 340 provides a list of connections to which the user is allowed access.

Some of the listed connections may be associated with a specific analysis cube. A user may select one of these connections prior to 410 to transmit an instruction to initialize a data provider associated with the specific analysis cube that corresponds to the selected connection and with a dataset with which the specific analysis cube is associated. Some of the listed connections may be associated with a dataset and not with a specific analysis cube. In the latter instance, the user must select an analysis cube associated with the dataset in order to complete the instruction which is subsequently received at 410.

In response to the instruction, the data provider acquires first metadata associated with the analysis cube at 420. Based on the first metadata, the data provider generates second metadata of an abstraction layer comprising a plurality of objects at 420. Transient universe 370 comprises the second metadata according to some embodiments.

According to some embodiments, the metadata of transient universe 370 is generated deterministically. As a result, the objects of the second metadata will be associated with unique IDs corresponding to the same specific objects of the first metadata. These IDs will not change during subsequent generations of the second metadata. Such a correlation reduces the need to maintain two universes (i.e., one for BW data sources and one for BI data sources).

Acquisition of the first metadata may comprise executing the analysis cube with all default values for its key-dates and variables. The following mapping is used in some embodiments to generate the second metadata (i.e., BI Object) based on the first metadata (i.e., BW Concept):

| **BW concept** | **BI Object** |
|---|---|
| Hierarchy | Hierarchy (for a given Dimension) under the related Analysis Dimension. For a characteristic, the system lists all the hierarchies available. The active hierarchy (if any) becomes the default hierarchy. If the hierarchy is variable, the system shows only the one selected. |
| Hierarchy level | Level not available for query |
| Dimension | Analysis Dimension |
| Characteristic (without hierarchy) | BO Dimension (under the related Analysis Dimension) |
| Attribute (display) | Attribute (under the related Dimension and hierarchy) |
| Attribute (navigational) | BO Dimension |
| Key figure / formula | Measure (for the value) (unit/currency and formatted value are given as measure attribute) |
| Unit/currency | Measure attribute |
| Restricted/calculated key figure | Measure |
| Structure (hierarchical) | Hierarchy (at the root level) |
| Structure (key figure) (hierarchy not supported) | Measure group |

The objects of the generated second metadata may be organized according to the following hierarchy structure:
Analysis Dimension (BW dimension)
|--- BO Dimension (BW characteristic)
|--- hierarchy (related hierarchies)
|--- attribute (BW display attribute)
|--- presentation (long text, ....)

Measure
|--- Measure (key figure)
|--- Measure attribute (formatted value, unit/currency),
where an Analysis Dimension may include several dimensions, and a Dimension may include several hierarchies.

Moreover, the objects of the generated second metadata may exhibit the following data type mapping:

| Characteristic data type | Dimension data type |
|---|---|
| CHAR | Character (String) |
| NUMC | Numeric (until 16 digits) or character |
| DATS | Date (with time = 00:00:00) |
| TIMS | Character |
| | |

| Type/Data type | Measure data type |
|---|---|
| Date-DEC | Number |
| Date-DATS | Date (time = 00:00:00) |
| Number-DEC | Number |
| Number-FLTP | Number |
| Time-DEC | Number |
| Time-TIMS | Character |
| INTEGER | Number |
| Amount-Currency (stored as DEC) | Number |
| Amount-FLTP | Number |
| Quantity-QUAN | Number |
| Quantity-FLTP | Number |

After generation of the second metadata (i.e., transient universe 370), a query comprising a first plurality of the abstraction layer objects is received at 430. For example, the user may operate BI client 350 prior to 440 to build a dimensional BO_Query in the same manner in which such a query is built using system 200. More specifically, the user may operate BI client 350 to build a query comprising a first plurality of abstraction layer objects based on metadata of transient universe 370. The metadata is provided to BI client 350 by data provider 340.

According to some embodiments, and for each object of the second metadata, data provider 340 provides a qualification (dimension, hierarchy, detail, measure), a data type (numerical, string, date-time), a display name (short description), a description (long description), and a technical name to BI client 350. An object from a same analysis cube is associated with a same internal object ID (e.g., based on the underlying BW object UID), so a same object from a same analysis cube but from different data providers is not treated as two different objects. Also, if the metadata and data are translated in the underlying business warehouse and a language has been specified at connection time (e.g., the user's preferred viewing language, a language specified by the OLAP connection object), data provider 340 translates the metadata and data accordingly before providing it to BI client 350.

In a case that a query requests a measure in an aggregation context which is more aggregated than the context of the query, data provider 340 may use the "all" member (i.e., total lines calculated) for the analysis dimension which is not present in the context of the query. In particular, data provider 340 returns the total (i.e., "all") member for any characteristic or hierarchy requested in the query result. If the total member is not part of the query's member selection, it is not returned as a value to display, but it is used for calculation purposes (e.g., slicer on this value for missing characteristic or hierarchy).

A measure attribute is a property value (e.g., amount currency, quantity unit, formatted value) given to a measure value and associated with a measure. If a measure attribute is requested without a request for the corresponding measure, data provider 340 may add the associated measure to the query. According to some embodiments, the user cannot define a query filter on a measure attribute.

The members of a dimension are presented with a caption (e.g., middle name) and a key-id (e.g., key). For a member of a hierarchy, this information may be presented on demand along with information specifying a parent member and a depth level. In this regard, data provider 340 provides BI client 350 with services for hierarchy member navigation. The information may be presented as a property of the member: the short name, long name and description. If not provided as a property, the information may be presented as an attribute for each object.

Data provider 340 also provides BI client 350 with a list of dimensions of analysis cube 320. This list may be used to pre-populate the query result object. The user may add any other available dimension(s) to the result object and build filter logic of the result object based on exposed metadata associated with the dimensions.

After the query is defined, the query is received by data provider 340 at 430. The query includes at least a plurality of the objects of transient universe 370. Of course, the query may also include variables, filters, etc. Any default values of variables specified in the defined query may alter the metadata of transient universe 370. Data provider may then execute the query in order to populate its result object with data from dataset 310.

In order to execute the query, data provider 340 transforms the query to a query state based on the metadata of transient universe 370. This transformation may commence by prompting the user for all variables associated with the query and executing any prompts defined by the query.

After receiving responses to the prompts, data provider 340 translates the query's member selections into drill operations of a business warehouse analysis service (e.g., BICS drill operations), and translates the query's filters into conditions of a business warehouse analysis service (e.g., BICS conditions). This translation uses the metadata of transient universe 370 and services of data provider 340.

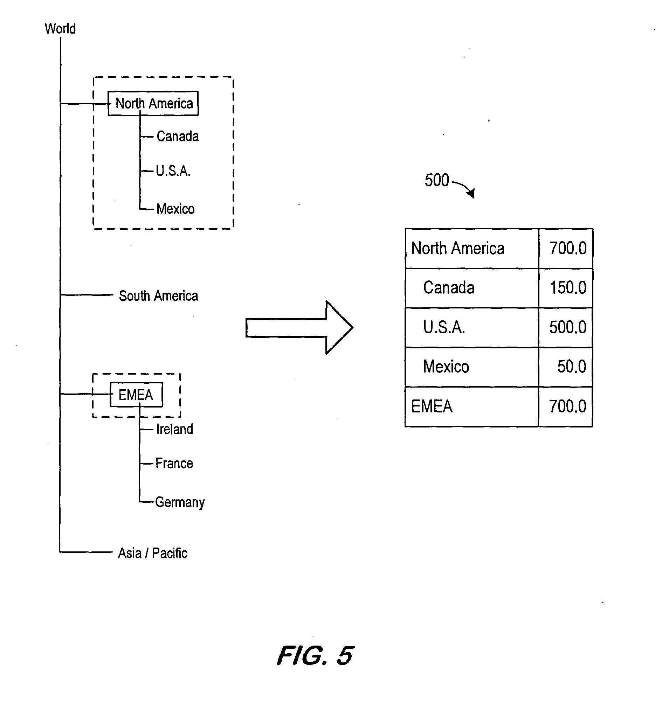

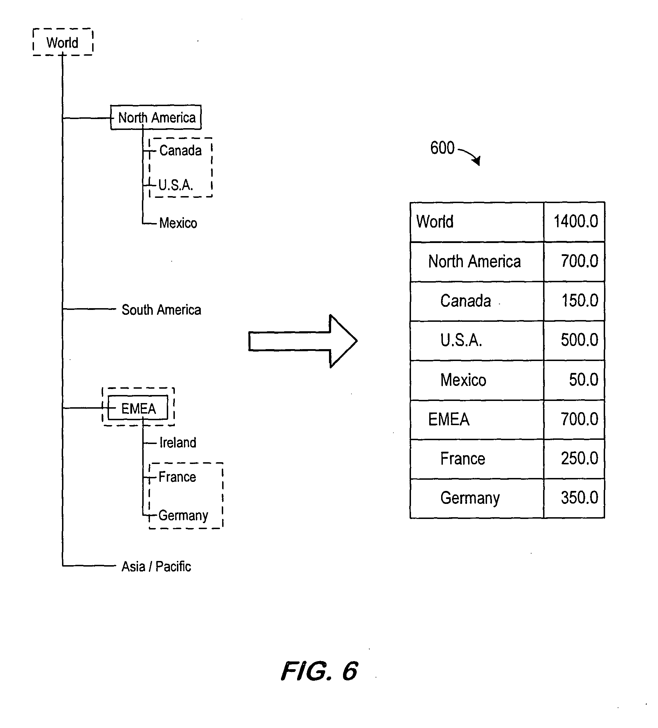

The expressiveness and semantics of member selections/drill operations and filters/conditions do not strictly coincide. FIGS. 5 and 6 illustrate differences that may be taken into account when translating the query's member selections and filters into drill operations and conditions.

Generally, business warehouse queries and BI queries allow selection of a subset of a source data set, and aggregation of facts from the selected data subset according to combinations of dimensional member sets. A dimensional member set may be defined by the value of some dimension characteristic or attribute (i.e., the attribute defines a partition on the dimension) and/or by a hierarchy node (e.g., each hierarchy node is defined directly or transitively as a set of leaf elements belonging to the dimension).

According to BICS, for example, a selection is specified through a selection state, which is a list of restrictions on some characteristics. Dimensions that are not requested in the result set (i.e., projected-out dimensions) are placed on a free axis. Requested dimensions may be placed on either a row axis or a column axis, and grouping sets are specified using drill operations.

If a hierarchy is constrained by the selection state and appears on a result axis, then the nodes of the selected hierarchy are the roots of the drill operations. These drill operations follow continuous paths from the roots to the deepest nodes, and, when a node is expanded, all children of the node become part of the drill state. Consequently, the drill state on a single hierarchy is a forest (i.e., multiple roots) that may be unbalanced (i.e., different depths from the roots down to corresponding deepest nodes) but cannot be ragged (i.e., if a node and some of its grandchild nodes are part of the drill state, the intermediate nodes along the lineage are also part of the drill state).

FIG. 5 illustrates an example of such a drill forest. The nodes surrounded by a solid line (i.e., "North America" and "EMEA" ) are the roots of the forest, and also define the selection state for the "Geography" hierarchy. The nodes surrounded by a dashed line (i.e., "North America", "Canada", "U.S.A", "Mexico", and "EMEA") represent the drill state from the selected node. As shown in table 500, It is not possible to obtain aggregates for nodes located above the selection state (e.g., "World"). It is also not possible to obtain aggregates for a strict subset of children of a node (e.g., "Canada" and "U.S.A.", but not "Mexico"). The selection state might contain constraints on dimensions that do not appear in the result set (e.g., "Time" = 2008).

In contrast, a BI query such as that received in 430 is associated with a set of result objects (for an OLAP source, these objects comprise mostly hierarchies and measures), and a tree of filters. The filters are to prune a dataset by selecting subsets on cube dimensions. The filters are equivalent to but differ slightly from the above-described BICS selection state. Each hierarchy in the set of result objects can be specified using a symbolic member selection, expressed as a list of [except] <member>.<function> elements, where <member> refers to a hierarchy node, <function> is a navigation function from the node (e.g., children, parent, descendants, siblings), and [except] optionally allows exclusion of members from the selection rather than including them. This member selection is similar to a BICS drill operation, with two primary differences.

First, if a hierarchy appears in the result objects with a member selection, and is also constrained by a filter, the member selection and the filter are independent. In particular, the filter may select hierarchy nodes that are not the roots of the member selection. Second, a symbolic member selection may have multiple roots and be unbalanced such as in a BICS drill operation, but it may also be ragged, with subsets of siblings selected or nodes from a lineage skipped.

FIG. 6 illustrates an example of a ragged symbolic selection decoupled from a filter. Accordingly, FIG. 6 illustrates both of the differences described above. The nodes surrounded by a solid line are the result of the application of a filter such as "Area inlist ("North America", "EMEA")". The member selection is denoted by dashed lines, and could be expressed as:
"World".member
"North America".children
except "Mexico".member
"EMEA".member
"France".member
"Germany".member

Accordingly, members among siblings may be excluded either by explicit individual selection of the desired members, or by exclusion of the unwanted ones. In contrast, when a non-root member is drilled using BICS drill operations, all its siblings are part of the drill state. In the FIG. 6 example, "North America" is excluded from the result set, although its parent ("World") and some of its children ("Canada", "U.S.A.") are part of it.

Table 600 shows the computation of all aggregates according to the filter condition, without taking into account the exclusion of some children of a selected node. For instance, aggregates for "World" are computed from leaves of "North America" and "EMEA", at the exclusion of "South America" and "Asia/Pacific", because these two nodes are pruned out by the filter condition. The aggregate for "World" is therefore a custom aggregate. BICS would not allow to access "World" if it is not a descendant of the nodes in the selection state.

On the other hand, aggregates for "EMEA" are computed against all leaves of this area, because "EMEA" fully passes the filter condition. The fact that "Ireland" is not part of the member selection has no impact on the aggregation on its parent "EMEA". BICS would not currently allow drilling into "EMEA" while skipping "Ireland".

After translating the BI query to a business warehouse analysis query (e.g., BICS query), data provider 340 creates query state 330 based on the business warehouse analysis query at 440. For example, the BICS SDK provides serialization of a BICS navigation state from a BICS query in an eXtended Markup Language (XML) representation.

Next, at 450, a result set is acquired from the dataset using the query state and the analysis cube. According to some embodiments of 450, a BICS query view is instantiated from the query state, which results in the acquisition of a corresponding result set from dataset 310 via analysis cube 320. The result set may be stored presented to the user and/or stored in a report document associated with the received query. BI client 350 may open the report document for any user who has the appropriate rights.

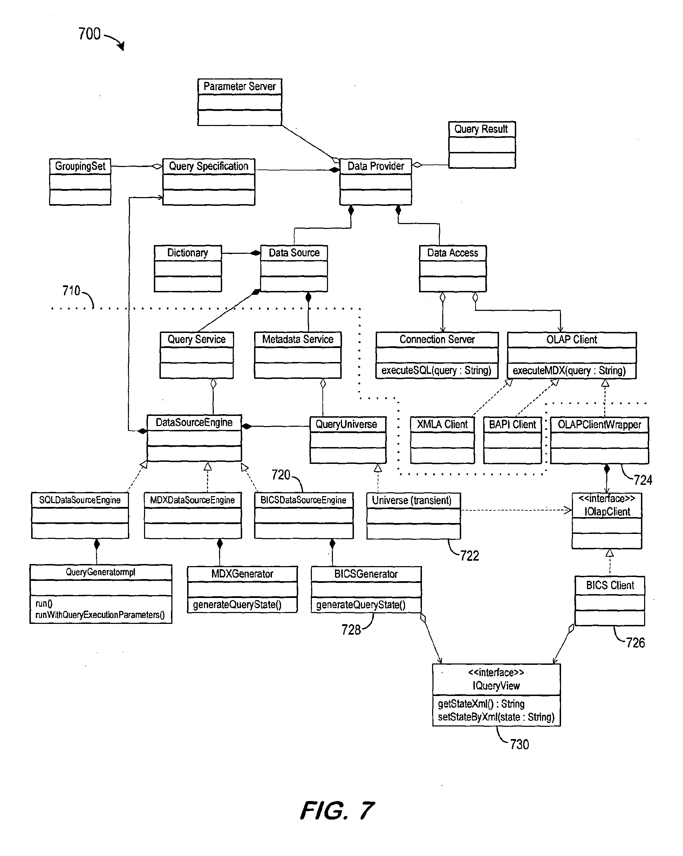

FIG. 7 shows class diagram 700 of data provider 340 according to some embodiments. A system according to class diagram 700 may provide functionality according to process 400 and the other processes described herein.

The classes above dotted line 710 are C++ components which currently exist in the SAP BusinessObjects Information Engine architecture, classes 720 through 728 are new components to support data warehouse analysis services (e.g., BICS) in a dimensional semantic layer data provider, the IQueryView interface 730 is an existing component of the BICS client SDK, and the remaining classes/interfaces are Java components which currently exist in the SAP BusinessObjects Information Engine architecture.

The Java interface IOlapClient is used to extract metadata from an OLAP source in order to bootstrap the contents of a transient universe. In order to support BICS, BICS client component 726 will implement the IOlapClient interface. Component 726 may provide the features of other OLAP clients for BW sources (e.g., BAPI or XMLA client for BW sources). In contract to these OLAP clients, BICS client component 726 will provide metadata to feed a transient universe.

OLAPCIientWrapper 724 is a generic C++-to-Java wrapper on top of the IOlapClient java interface. Wrapper 724 supports List Of Values fetching and query execution capabilities of the IOlapClient interface, at the exclusion of metadata discovery.

The DatasourceEngine class is to handle an incoming query specification by identifying the list of variables that need to be prompted in order to refine the query semantics, and translating the query specification with its instanciated variables into the target native query language (e.g. SQL, MDX). The DatasourceEngine class relies on Generator classes to handle all the specificities of the target source. For instance, all query logic goes through SQL for a relational source, including fetching a List of Values to instantiate a variable. For an OLAP source, some logic is handled through MDX (e.g., fetching a cell set), whereas the prompting logic may be more efficiently handled by outline services (e.g., specific BAPI calls to fetch the contents of a hierarchy). For BICS sources, BICSGenerator class 728 may handle all the logic related to variable prompting and query view editing.

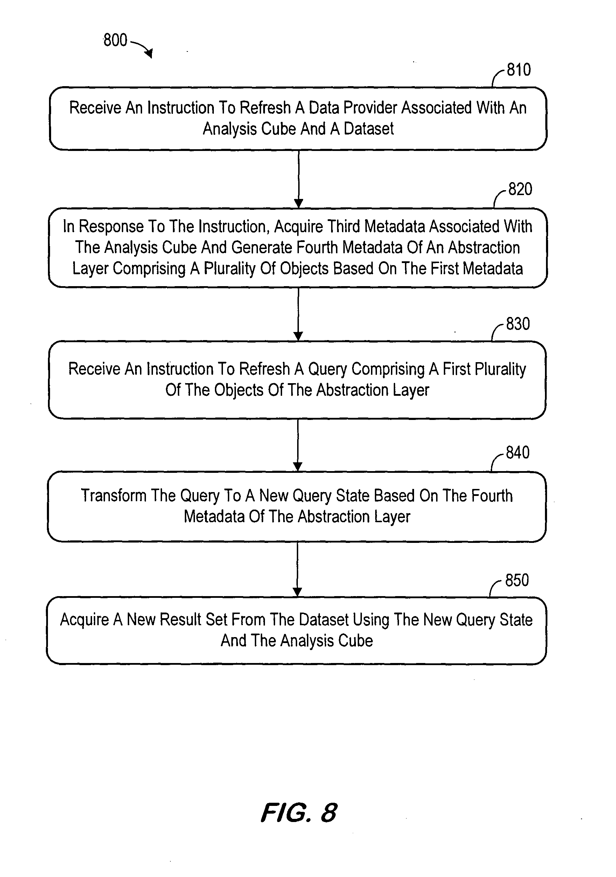

Process 800 of FIG. 8 concerns refreshing a data provider according to some embodiments. Process 800 illustrates how some embodiments efficiently handle changes to the metadata of a business warehouse data source (e.g., analysis cube 320) and/or the metadata of a transient universe in view of an existing query specification.

Initially, at 810, an instruction is received to refresh a data provider associated with an analysis cube and a dataset. If the data provider has parameters (including variables from the underlying analysis cube), the system (e.g., data provider 340) prompts the user with a list of parameters (including parameters mapped to the analysis cube variables) requiring a value.

The metadata of transient universe 370 are automatically updated to reflect any new variable values provided by the user. As mentioned with respect to process 400, variable values may be provided when designing a query. To avoid changes to the metadata or query inconsistencies caused by a new variable value, the variable value provided at design time can be designated as fixed. As a result, the user is not prompted for this value at a next refresh.

The following types of variables may be supported: Key date, Characteristic value variables, Hierarchy variables, Hierarchy version, Hierarchy node variables, Currency, Text variables, and Formula variables. Moreover, four types of variable processing may be provided: Manual entry/default value, Replacement path (value given by a given characteristic), Exit client/BW (value given by an ABAP procedure), Authorization (value given accordingly of the user rights).

The table below summarizes the possible combinations of variable types and variable processing:

| | Charac. | node | text | formula | hierarchy | ready for input |
|---|---|---|---|---|---|---|
| Manual entry | x | x | x | x | x | x |
| Replacement path | x | - | x | x | - | - |
| Exit (client/BW) | x | x | x | x | x | x |
| authorization | x | x | - | - | - | x |

Single, multi-value and range inputs may be supported for certain variables. Data provider 340 may also provide Lists Of Values related to a prompted variable. The table below provides the mapping of different types of BICS variables to associated Lists of Values.

| **BICS variable** | **Prompt** | **Lists Of Values** |
|---|---|---|
| Key date | Prompt on date | none |
| Characteristic value variables | prompt on dimension | LOV of the given characteristic |
| Hierarchy variables | Prompt for a hierarchy selection | Hierarchy list (possible flat characteristic) |
| Hierarchy version | Prompt for a version | Versions for a given hierarchy |
| Hierarchy date variable | Prompt on date | |
| Hierarchy node variables | Prompt for a selection on the hierarchy | Related hierarchy |
| Currency | Prompt for a currency | LOV of the currency characteristic |
| Text variables | Prompt for a text | None |
| Formula variables | Prompt for a numeric | None |
| Optional | Optional prompt | |
| Mandatory | Default prompt | |
| Mandatory no initial value | Default prompt | |
| Interval | Between prompt | |
| Complex selection | Between prompt (limited to 1 range supported) | |
| Exclude (multi-value selection) | Not available | |
| Default value | Default value (except for complex selection) | |

Returning to process 800, steps 820 through 850 may proceed similarly to corresponding ones of steps 420 through 450. However, as noted above, metadata of analysis cube 320 may have changed since a last refresh. Accordingly, the metadata of analysis cube 320 is denoted as "third" metadata (in contrast to the "first" metadata of step 420), and the metadata of the abstraction layer (i.e., transient universe 370) is denoted at 820 as "fourth" metadata (in contrast to the "second" metadata of step 420). The terms "first", "second", "third" and "fourth" are merely intended to distinguish the different sets of metadata and do not denote a version number or any temporal relation.

As mentioned above, the fourth metadata will represent an object (or other entity) of analysis cube 320 using the same object ID that was used in the second metadata to represent the same object (or entity). Any objects (or entities) deleted from analysis cube 320 will not be represented in the fourth metadata. By using the same object IDs, the previously-received query, which was designed in view of the second metadata, may be used in conjunction with the fourth metadata.

In this regard, an instruction to refresh the query of step 430 is received at 830. Steps 840 through 860 are then executed in view of the fourth metadata to generate a new query state and to acquire a new result set. The new result set may be used to populate any report documents associated with the query.

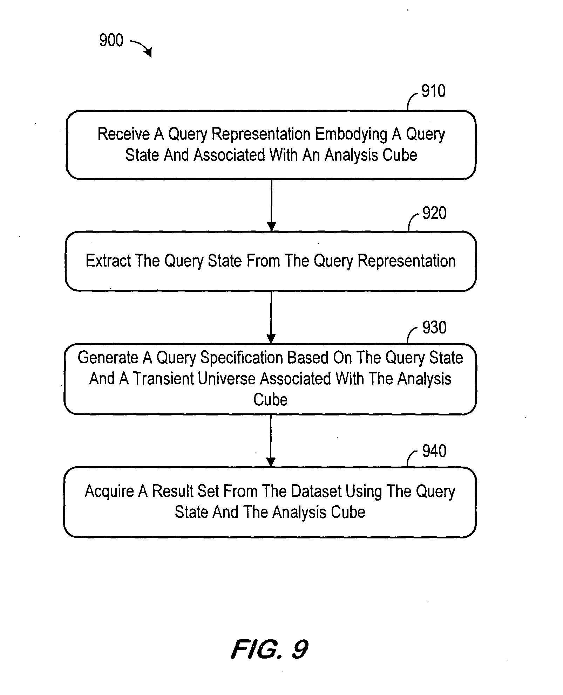

Process 900 of FIG. 9 concerns the use of a query generated by an OLAP client such as BEx Analyzer. At 910, a query representation embodying a query state and associated with an analysis cube is received. As described above, the query representation may comprise a pQuery associated with a transient connection (e.g., to analysis cube 320) and with transient universe 370.

The query state is extracted from the query representation at 920. Extraction of the query state may comprise serializing an XML representation of the query state as described above. Next, at 930, a query specification is generated based on the query state and a transient universe associated with the analysis cube. In this regard, 930 may comprise generating a transient universe as described above with respect to steps 420 and 820.

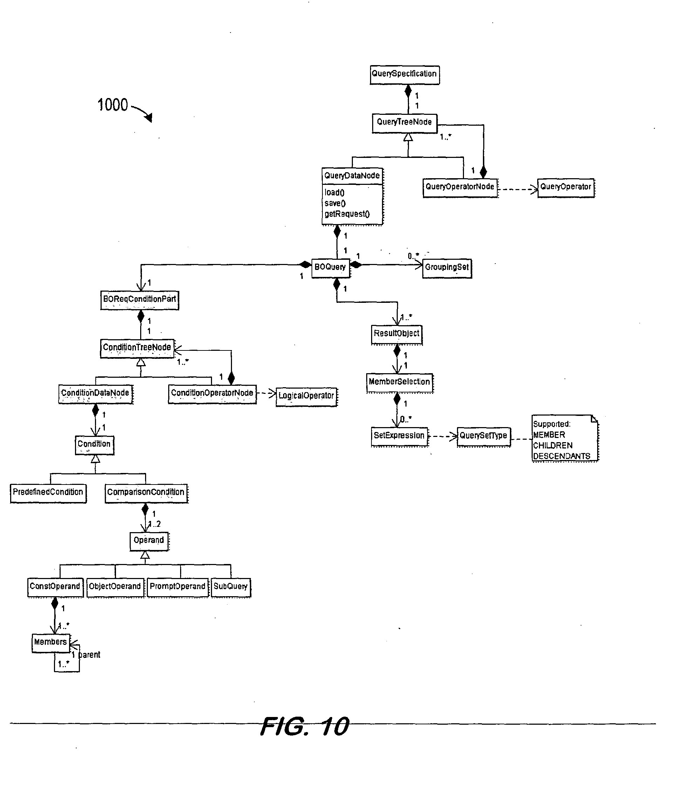

FIG. 10 illustrates class diagram 1000 of a query specification which may be generated at 930 according to some embodiments. As shown, a BICS query view corresponds to a query specification associated with a single query "BOQuery" (i.e., a single flow of data in the results). The condition-related nodes (i.e., shaded nodes under and including the BOReqConditionPart node) are extracted from the BICS selection state, as a conjunction of comparison conditions such as <characteristic/hierarchy> INLIST <nodes>. The result objects are extracted from the dimensions on visible axes (e.g., row and column axes)

The member selections (i.e., the ResultObject node and its descendants) are deduced from the drill operations. As shown, the supported query set functions which are consistent with BICS drill operations are: MEMBER, CHILDREN, and DESCENDANTS.

Finally, at 940, a result set is acquired from dataset 310 using the query state and analysis cube 320 as described with respect to steps 450 and 850. Again, the result set may be used to populate any BI report documents associated with the query specification.

The processes described herein may expose BW data sources using the same metadata metaphor as is used for BI sources, but without a universe design phase. Moreover, the life-cycle of the query created on the top of the transient universe allows automatic reflection of changes in BW metadata. For example, if an object is removed from a BEx query that serves as a data source to a BI query, the removal will be reflected in a result set upon a next refresh of the BI query.

Embodiments described herein are solely for the purpose of illustration. Those in the art will recognize other embodiments may be practiced with modifications and alterations-to that described above.

## Claims

1. A computer-implemented method comprising:
receiving an instruction to initialize a data provider associated with an analysis cube and a dataset;
in response to the instruction, acquiring first metadata associated with the analysis cube and generating, based on the first metadata, second metadata of an abstraction layer comprising a plurality of objects;
receiving a query comprising a first plurality of objects of the abstraction layer;
transforming the query to a query state based on the second metadata of the abstraction layer; and
acquiring a result set from the dataset using the query state and the analysis cube

2. A method according to Claim 1, further comprising:
receiving an instruction to refresh the data provider; and
in response to the instruction, acquiring third metadata associated with the analysis cube and generating, based on the third metadata, fourth metadata of a second abstraction layer comprising a second plurality of objects.

3. A method according to Claim 2, further comprising:
receiving an instruction to refresh the query;
transforming the query to a new query state based on the fourth metadata of the second abstraction layer; and
acquiring a second result set from the dataset using the new query state and the analysis cube.

4. A method according to Claim 3, further comprising:
editing the new query state;
receiving a second instruction to refresh the query; and
acquiring a third result set from the dataset using the edited new query state and the analysis cube associated with the query state.

5. A method according to Claim 1, further comprising:
editing the query state;
receiving an instruction to refresh the query; and
acquiring a second result set from the dataset using the edited query state and the analysis cube associated with the query state.

6. A method according to Claim 1, wherein receiving the query comprises receiving values of one or more variables associated with the analysis cube.

7. A method according to Claim 6, further comprising:
updating the second metadata based on the values of the one or more variables.

8. A computer-readable medium having stored thereon program code, the program code executable by a computer to perform the method of any one of claims 1 to 7.

9. A system comprising:
a dataset; and
a data provider to:
receive a reference to an analysis cube associated with a dataset;
in response to the reference, acquire first metadata associated with the analysis cube and generate, based on the first metadata, second metadata of an abstraction layer comprising a plurality of objects;
receive a query comprising a first plurality of objects of the abstraction layer;
transform the query to a query state based on the second metadata of the abstraction layer; and
acquire a result set from the dataset using the query state and the analysis cube.

10. A system according to Claim 9, the data provider further to:
receive an instruction to refresh itself; and
in response to the instruction, acquire third metadata associated with the analysis cube and generate, based on the third metadata, fourth metadata of a second abstraction layer comprising a second plurality of objects.

11. A system according to Claim 10, the data provider further to:
receive an instruction to refresh the query;
transform the query to a new query state based on the fourth metadata of the second abstraction layer; and
acquire a second result set from the dataset using the new query state and the analysis cube.

12. A system according to Claim 11, the data provider further to:
edit the new query state;
receive a second instruction to refresh the query; and
acquire a third result set from the dataset using the edited new query state and the analysis cube associated with the query state.

13. A system according to Claim 9, the data provider further to:
edit the query state;
receive an instruction to refresh the query; and
acquire a second result set from the dataset using the edited query state and the analysis cube associated with the query state.

14. A system according to Claim 9, wherein reception of the query comprises:
reception of values of one or more variables associated with the analysis cube.

15. A system according to Claim 9, the data provider further to:
update the second metadata based on the values of the one or more variables.
